# EUROPEAN PATENT APPLICATION

(11) **EP 4 429 322 A1**
(43) Date of publication of application: **11.09.2024**
(21) Application number: 22889711.2
(22) Date of filing: 04.10.2022
(51) Int. Cl.: H04W 28/16, H04W 16/14, H04W 84/12, H04W 92/20

(54) **ACCESS POINT AND COMMUNICATION METHOD**

(30) Priority: 04.11.2021 JP 2021180361
(71) Applicant: Panasonic Intellectual Property Corporation of America, Torrance, CA 90504 (US)
(72) Inventor: MINOTANI, Jun, Kadoma-shi Osaka 571-0057 (JP); IWAI, Takashi, Kadoma-shi Osaka 571-0057 (JP); URABE, Yoshio, Kadoma-shi Osaka 571-0057 (JP)
(74) Representative: Grünecker Patent- und Rechtsanwälte PartG mbB
(86) International application number: PCT/JP2022/037062
(87) International publication number: WO 2023/079887

(57) **Abstract**

This access point comprises: a control circuit that determines channel information pertaining to control of cooperative communication, such determination being on the basis of a channel which is allocated to each of a plurality of access points in non-cooperative communication; and a transmission circuit that transmits channel information to another access point.

## Description

### Technical Field

The present disclosure relates to an access point and a communication method.

### Background Art

The technical specification of the Institute of Electrical and Electronics Engineers (IEEE) 802.11be (hereinafter, referred to as "11be") has been developed in the task group (TG) as the successor standard to 802.11ax (hereinafter, referred to as "11ax"), which is a standard of IEEE 802.11.

### Citation List

### Non Patent Literature

NPL 1
   IEEE 802.11-19/1582r2, Coordinated AP time/Frequency Sharing in a Transmit Opportunity in 11be
NPL 2
   IEEE Std 802.11^{™}-2016
NPL 3
   IEEE Std 802.11ax^{™}-2021
NPL 4
   IEEE 802.11-20/560r0, Multi-AP Configuration and Resource Allocation

### Summary of Invention

There is room for further study, however, on a method of controlling coordinated communication in radio communication.

One non-limiting and exemplary embodiment facilitates providing an access point and a communication method each capable of improving communication efficiency of coordinated communication in radio communication.

An access point according to an embodiment of the present disclosure includes: control circuitry, which, in operation, determines channel information related to control of coordinated communication based on channels allocated respectively to a plurality of access points in uncoordinated communication; and transmission circuitry, which, in operation, transmits the channel information to another access point.

It should be noted that general or specific embodiments may be implemented as a system, an apparatus, a method, an integrated circuit, a computer program, a storage medium, or any selective combination thereof.

According to an exemplary embodiment of the present disclosure, it is possible to improve communication efficiency of coordinated communication in radio communication.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates exemplary multi-access point (MAP) coordination control;
FIG. 2 illustrates exemplary negotiation between access points (APs);
FIG. 3 illustrates an exemplary high throughput (HT) operation element;
FIG. 4 illustrates an exemplary high efficient (HE) operation element;
FIG. 5 illustrates exemplary allocation of primary channels in multi-AP coordination;
FIG. 6 illustrates exemplary allocation of primary channels in non-multi-AP coordination;
FIG. 7 illustrates exemplary allocation of primary channels in non-multi-AP coordination;
FIG. 8 illustrates exemplary allocation of primary channels in multi-AP coordination;
FIG. 9 is a sequence diagram describing exemplary operations of APs and stations (STAs);
FIG. 10 is a block diagram illustrating an exemplary configuration of part of an AP;
FIG. 11is a block diagram illustrating an exemplary configuration of part of an STA;
FIG. 12 is a block diagram illustrating an exemplary configuration of the AP;
FIG. 13 is a block diagram illustrating an exemplary configuration of the STA;
FIG. 14 illustrates exemplary operations of APs and STAs;
FIG. 15 illustrates an exemplary multi-AP coordination channel information element;
FIG. 16 illustrates an exemplary multi-AP coordination trigger frame;
FIG. 17 illustrates an exemplary multi-AP coordination channel information element;
FIG. 18 illustrates an exemplary multi-AP coordination trigger frame;
FIG. 19 illustrates an exemplary multi-AP coordination operating channel;
FIG. 20 illustrates an exemplary multi-AP coordination operation channel information element;
FIG. 21 illustrates an exemplary multi-AP coordination operation channel trigger frame;
FIG. 22 illustrates exemplary coordination groups;
FIG. 23 illustrates an exemplary primary channel information frame;
FIG. 24 illustrates exemplary operations of APs; and
FIG. 25 illustrates an exemplary channel switch announcement frame.

### Description of Embodiments

Hereinafter, embodiments of the present disclosure will be described in detail with reference to the accompanying drawings.

### [Multi-AP coordination]

In 11be, studies have been carried out on multi-AP (MAP) coordination (also referred to as "coordinated communication") in which a plurality of access points (each also referred to as a "base station" and hereinafter referred to as an "AP") cooperatively perform transmission and reception.

In multi-AP coordination, an AP that has obtained a period for using a channel (transmission opportunity (TXOP)), for example, is referred to as a "sharing AP". The AP may obtain the TXOP by carrier sense multiple access/collision avoidance (CSMA/CA), for example. The sharing AP may be an AP that controls coordinated communication in multi-AP coordination.

In multi-AP coordination, an AP that is controlled by a sharing AP in terms of coordinated communication, for example, is referred to as a "shared AP".

In multi-AP coordination, for example, a terminal (also referred to as a station (STA) or non-AP STA) that belongs to (e.g., belongs to, connects to, or associates with) a sharing AP may be called a "sharing STA", and an STA that belongs to a shared AP may be referred to as a "shared STA".

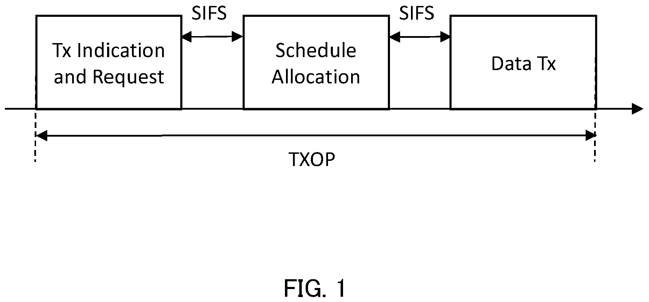

FIG. 1 illustrates an exemplary method of multi- AP coordination control. In FIG. 1, for example, multi-AP coordination processing is divided into three phases: a "Tx indication and request" phase; a "schedule allocation" phase; and a "data Tx" phase.

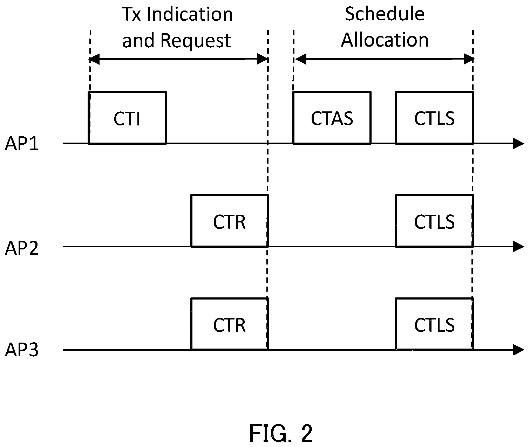

FIG. 2 illustrates exemplary negotiation (e.g., Tx indication and request phase and schedule allocation phase) between APs (e.g., sharing AP and shared APs) in multi-AP coordination. In the example of FIG. 2, AP 1 may be a sharing AP, and AP 2 and AP 3 may be shared APs.

As illustrated in FIG. 2, in the first step of the Tx indication and request phase, the sharing AP (AP 1) transmits a coordinated AP TXOP Indication (CTI) frame to the shared APs (AP 2 and AP 3) to request responses on whether the shared APs can participate in multi-AP coordination. The shared APs (AP 2 and AP 3) respond to the CTI from AP 1 by transmitting, to the sharing AP (AP 1), coordinated AP TXOP request (CTR) frames that indicate whether the shared APs participate in multi-AP coordination.

As illustrated in FIG. 2, in the second step of the schedule allocation phase, the sharing AP (AP 1) transmits a coordinated AP TXOP AP schedule (CTAS) frame to the shared APs (AP 2 and AP 3) to indicate the allocation information such as information of resources (e.g., frequency and time resources) available to the shared AP and transmission start time. Subsequently, each of the sharing AP (AP 1) and shared APs (AP 2 and AP 3) transmits, for example, a coordinated AP TXOP local schedule (CTLS) frame to indicate to a terminal (e.g., STA) under the control of each AP the allocation information such as available resource information and transmission start time.

Then, as illustrated in FIG. 1, in the third step of the data Tx (e.g., data Tx phase), the APs and STAs perform coordinated communication (or also referred to as coordinated transmission) based on the allocation information. For example, the coordinated communication in the data TX phase may include joint transmission (JT), coordinated beamforming (CBF), coordinated spatial reuse (CSR), coordinated orthogonal frequency division multiple access (COFDMA), or coordinated time division multiple access (CTDMA). The coordinated communication may be either coordinated communication in downlink (downlink coordinated communication) or coordinated communication in uplink (uplink coordinated communication).

Note that the method of controlling multi-AP coordination illustrated in FIGS. 1 and 2 is merely an example, and the method is not limited to that illustrated in FIGS. 1 and 2.

### [Primary Channel Allocation]

In 1 1be, for example, a method of allocating a primary channel (e.g., primary 20 MHz channel) in multi-AP coordination has been studied.

By way of example, the primary 20 MHz channel is a channel individually defined for a basic service set (BSS) composed of an AP and a plurality of STAs under the control of the AP, for example, and may be used for transmission and reception of signals by the AP and STAs belonging to the BSS. The primary 20 MHz channel may be determined, for example, from among channels available to the AP (e.g., also referred to as an "operation channels" or "operating channels").

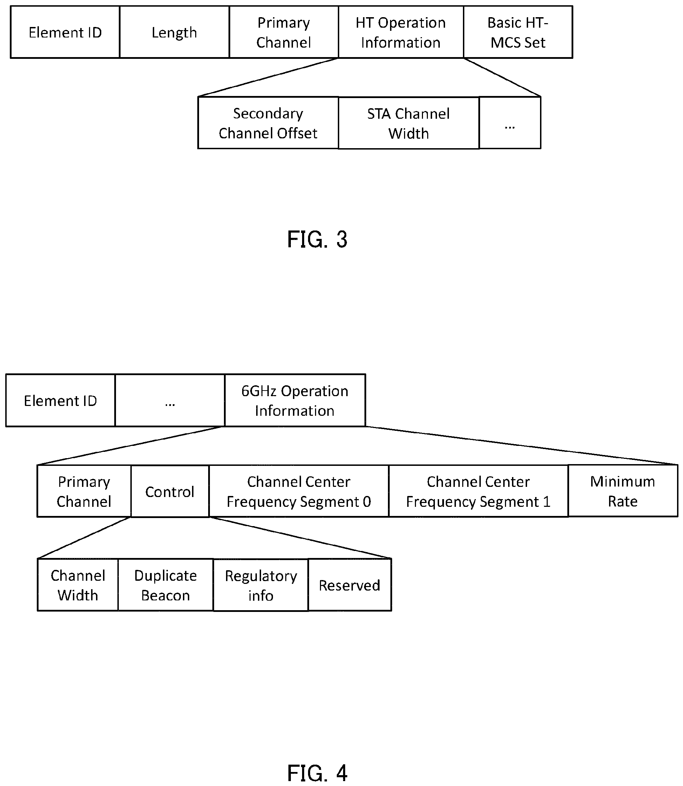

For example, the primary channel (e.g., primary 20 MHz channel) may be included in an operation element illustrated in FIGS. 3 and 4 and indicated from the AP to the STAs (see, for example, NPL 2 or 3).

FIG. 3 illustrates an exemplary high throughput (HT) operation element. The HT operation element illustrated in FIG. 3 may, for example, use the "primary channel" field to indicate information (e.g., channel number (also referred to as channel index)) on a primary channel in 2.4 GHz and 5 GHz bands. In addition, FIG. 4 illustrates an exemplary high efficiency (HE) operation element. The HE operation element illustrated in FIG. 4, for example, may use the "primary channel" subfield included in the "6 GHz operation information" field to indicate information (e.g., channel number) on a primary channel in 6 GHz band.

Each operation element may be included in a signal (e.g., broadcast information) such as a beacon signal, a probe response signal, or an association signal (e.g., association response signal, or re-association response signal) and indicated from the AP to the STAs.

In 11be, for example, a sharing AP and a shared AP need not use the same primary channel in multi-AP coordination (see, for example, NPL 4). The primary channel (e.g., primary 20 MHz channel) of a sharing AP may be allocated within the operating channel of a shared AP, for example. Likewise, the primary channel (e.g., primary 20 MHz channel) of a shared AP may be allocated within the operating channel of a sharing AP.

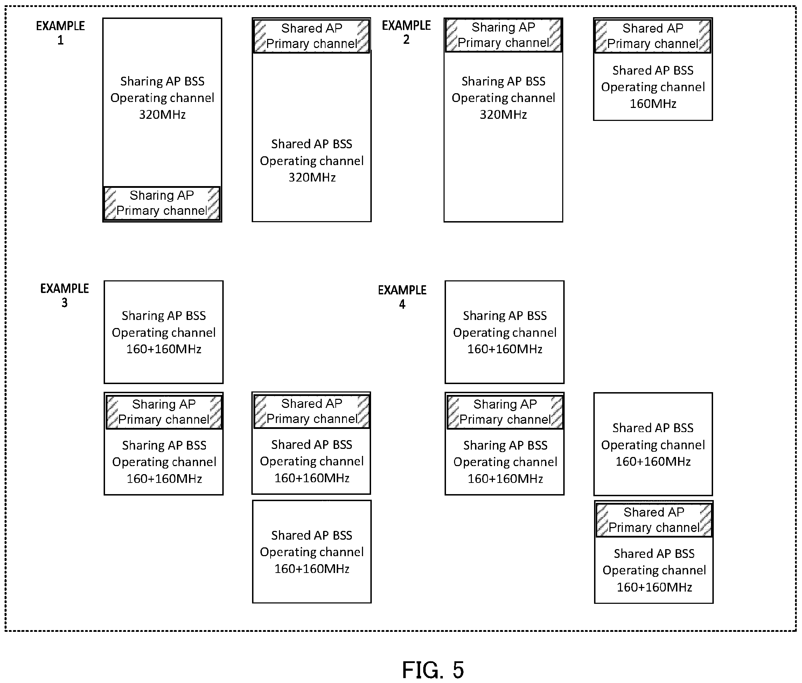

FIG. 5 illustrates exemplary configurations of operating channels and primary channels (e.g., primary 20 MHz channels) of a sharing AP and a shared AP. In Examples 1 to 3 of FIG. 5, the primary channels of the sharing AP and the shared AP are allocated in the operating channels of each other, and thus the sharing AP and the shared AP can transmit and receive signals each other. Meanwhile, in Example 4 of FIG. 5, the primary channel of the sharing AP is allocated outside the operating channel of the sharing AP, and thus the shared AP does not receive a transmission signal of the sharing AP.

The allocation of the primary channel has been described above.

A control method regarding a primary channel in multi-AP coordination is not fully discussed. For example, different primary channels may be configured between non-multi-AP coordination (also referred to as uncoordinated communication) and multi-AP coordination. Thus, the primary channel may be changed (or switched) between non-multi-AP coordination and multi-AP coordination, for example.

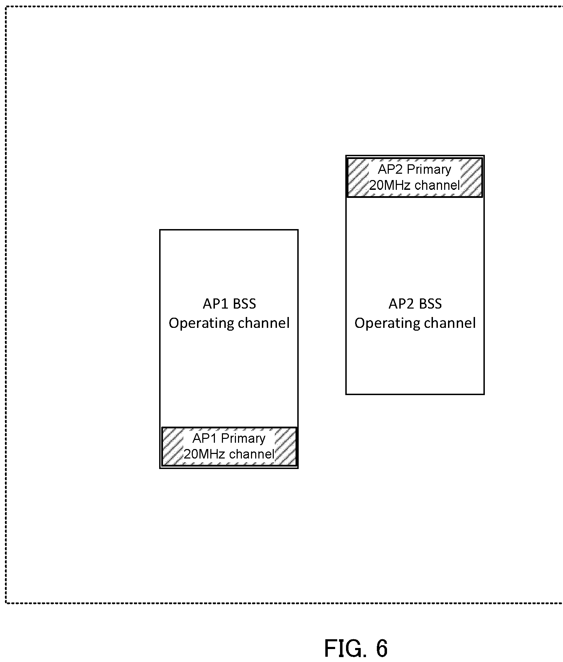

FIG. 6 illustrates exemplary allocation of primary channels (e.g., primary 20 MHz channels) in non-multi-AP coordination. As illustrated in FIG. 6, in non-multi-AP coordination, the APs (e.g., AP 1 and AP 2) do not consider the primary 20 MHz channel and the operating channel of each other; accordingly, their primary 20 MHz channels may be configured outside of each other's operating channel. In this case, the primary 20 MHz channels may be changed to be inside of the operating channel of each AP for multi-AP coordination.

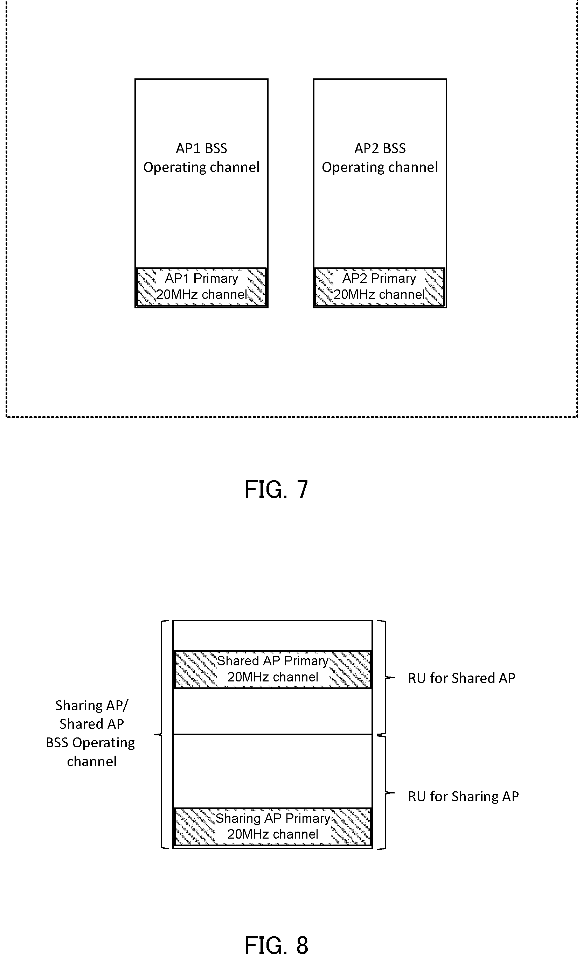

For example, the configuration may be changed as to whether the primary channels of the APs are matched with each other according to the coordinated communication method (or scheme) in multi-AP coordination. For example, as illustrated in FIG. 7, in a case where the primary channels (e.g., primary 20 MHz channels) of the APs (e.g., AP 1 and AP 2) are matched in non-multi-AP coordination, the primary 20 MHz channels may be changed to be inside of frequency resources (e.g., resource units (RUs)) respectively allocated to AP 1 and AP 2, as illustrated in FIG. 8, when COFDMA is applied in multi-AP coordination.

In one non-limiting embodiment of the present disclosure, a description will be given of a method for properly configuring (e.g., allocating, changing, or switching) channels (e.g., primary channels) in multi-AP coordination to improve the communication efficiency of coordinated communication in multi-AP coordination.

In one non-limiting embodiment of the present disclosure, a terminal (e.g., AP or STA) may determine the control over channels (e.g., primary channels) used for coordinated communication (e.g., multi-AP coordination) based on, for example, channel information (e.g., information on primary channel) of another terminal (e.g., AP or STA). According to one non-limiting embodiment of the present disclosure, the AP and the STA can appropriately transmit and receive a signal regarding multi-AP coordination by configuring (e.g., changing or switching) a channel (e.g., primary channel) used in multi-AP coordination based on channel information related to the control of multi-AP coordination.

Note that the "terminal" may refer to either an AP or a non-AP terminal (e.g., STA).

### [Configuration of Radio Communication System]

A radio communication system according to an embodiment of the present disclosure includes at least one coordination group that performs multi-AP coordination. The coordination group includes, for example, a plurality of APs 100 and at least one STA 200. For example, in downlink (DL) communication, AP 100 corresponds to a "downlink radio transmission apparatus", and STA200 corresponds to a "downlink radio reception apparatus". In uplink (UL) communication, AP 100 corresponds to an "uplink radio reception apparatus", and STA 200 corresponds to an "uplink radio transmission apparatus". For example, AP 100 may transmit a DL signal to another AP 100 or STA 200. For example, STA 200 transmits a UL signal based on the signal received from AP 100.

In the following, a plurality of APs 100 and a plurality of STAs 200 perform multi-AP coordination, by way of example. For example, a description will be given of a method in which two APs 100 (AP 1 and AP 2) transmit and receive control signals for multi-AP coordination between the APs and indicate to another AP 100 a primary channel (e.g., primary 20 MHz channel) used in multi-AP coordination.

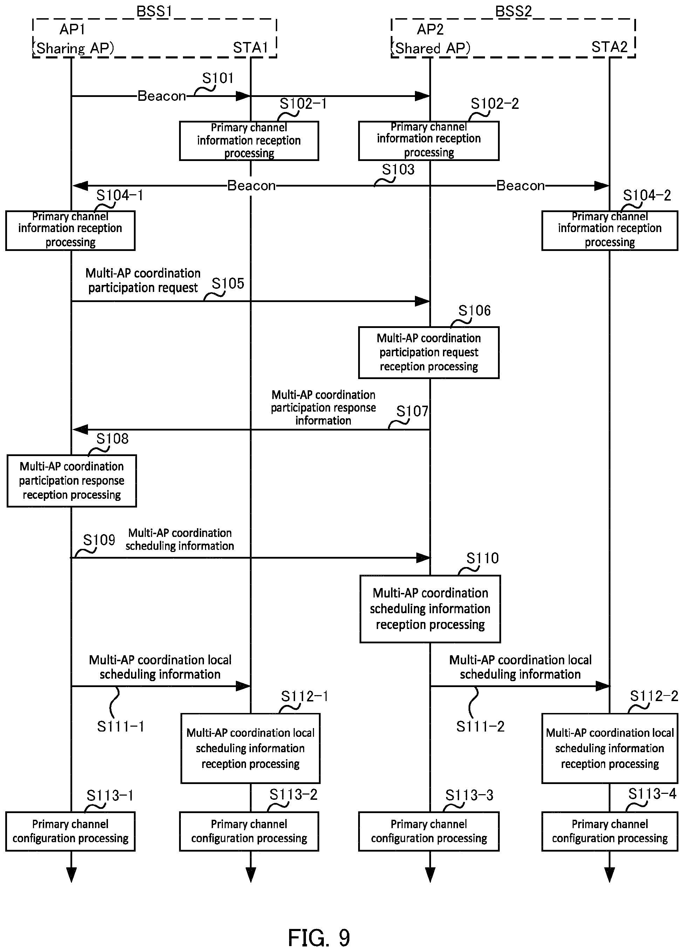

FIG. 9 is a sequence diagram illustrating exemplary operations for multi-AP coordination by APs 100 (e.g., including AP 1 and AP 2) and STAs 200 (e.g., including STA 1 and STA 2) in the radio communication system according to an embodiment of the present disclosure.

In FIG. 9, AP 1 and STA 1 may belong to BSS 1, and AP 2 and STA 2 may belong to BSS 2.

For example, AP 1 transmits a beacon signal including information on a primary channel of BSS 1 (non-multi-AP coordination), which is hereinafter referred to as "primary channel information", to STA 1 under the control of AP 1 (S101). STA 1 performs, for example, reception processing of the beacon signal transmitted from AP 1 (S102-1). For example, STA 1 may configure a primary channel based on the primary channel information included in the beacon signal. In addition, AP 2 receives a beacon signal transmitted from AP 1 to STA 1, for example, and stores the primary channel information used in BSS 1 in a buffer based on the primary channel information included in the received beacon signal (S 102-2).

Similar to AP 1, AP 2 transmits, for example, a beacon signal including primary channel information of BSS 2 (non-multi-AP coordination) to STA 2 under the control of AP 2 (S103). STA 2 performs, for example, reception processing of the beacon signal transmitted from AP 2 (S104-2). For example, STA 2 may configure a primary channel based on the primary channel information included in the beacon signal. In addition, AP 1 receives a beacon signal transmitted from AP 2 to STA2, for example, and stores the primary channel information used in BSS 2 in a buffer based on the primary channel information included in the received beacon signal (S104-1).

AP 1, for example, acquires TXOP and operates as a sharing AP that controls (or initiates) multi-AP coordination. AP 1 transmits a signal for requesting participation in multi-AP coordination (e.g., CTI) to AP 2 (S105).

AP 2 performs, for example, reception processing of the multi-AP coordination participation request signal (S106). For example, AP 2 may determine whether to participate in multi-AP coordination based on the capability information (capability) on multi-AP coordination. AP 2 transmits, to AP 1, multi-AP coordination participation response information (e.g., CTR) including whether to participate in multi-AP coordination, for example (S107).

AP 1 performs reception processing of the multi-AP coordination participation response information signal (S108). For example, AP 1 may determine a multi-AP coordination method (e.g., JT, CBF, CSR, COFDMA, or CTDMA) and perform scheduling based on information on an AP (e.g., shared AP) participating in multi-AP coordination. AP 1 then transmits, for example, multi-AP coordination scheduling information (e.g., CTAS) to the shared AP (e.g., including AP 2) (S109). AP 2 performs, for example, reception processing of the multi-AP coordination scheduling information from AP 1 (S 110).

The multi-AP coordination scheduling information may include, for example, information on APs 100 performing coordinated communication (e.g., service set identifier (SSID) common to a coordination group composed of APs 100 performing coordinated communication, or association identifier (AID) of each STA), information of a resource available to each AP 100 (e.g., frequency resource information or time resource information), information on weighting (also referred to as steering, spatial mapping, or transmission precoding) to amplitude or phase in coordinated communication, or transmit power information.

In addition, the multi-AP coordination scheduling information may include, for example, primary channel information regarding the operation of multi-AP coordination (e.g., primary channel information or operating channel information of each of the sharing AP and the shared AP).

For example, AP 1 and AP 2 transmit multi-AP coordination local scheduling information (e.g., CTLS) to STAs (e.g., STA 1 and STA 2) under the control of each AP (S111-1 and S111-2).

The multi-AP coordination local scheduling information may include, for example, resource information (e.g., frequency resource information or reception timing information) for STA 1 or STA 2 to receive a DL multi-AP coordination signal, or resource information (e.g., frequency resource information, transmission timing information, or transmit power information) for STA 1 or STA 2 to transmit a UL multi-AP coordination signal.

Further, the multi-AP coordination local scheduling information may include, for example, primary channel information related to multi-AP coordination (e.g., primary channel information or operating channel information of the shared AP) for STA 1 and STA 2 to transmit and receive signals in multi-AP coordination.

STA 1 and STA 2 perform reception processing of the multi-AP coordination local scheduling information (S112-1 and S112-2).

AP 1 and STA 1, and AP 2 and STA 2 may configure a primary channel in multi-AP coordination, for example, based on the individual primary channel information for the BSS indicated by the beacon signal, and the primary channel information regarding multi-AP coordination indicated by each scheduling information (S113-1 to S113-4). For example, AP 1 and STA 1, and AP 2 and STA 2 may switch the primary channel when the primary channel based on multi-AP coordination is changed with respect to the primary channel based on the individual primary channel information for the BSS.

Exemplary operations related to multi-AP coordination by APs 100 and STAs 200 have been described, thus far.

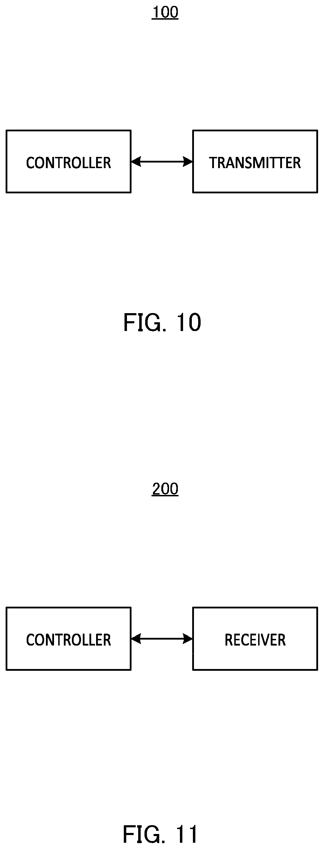

FIG. 10 is a block diagram illustrating an exemplary configuration of part of AP 100 according to an embodiment of the present disclosure. In AP 100 illustrated in FIG. 10, a controller (e.g., corresponding to control circuitry) determines channel information related to the control of coordinated communication (e.g., multi-AP coordination) based on channels allocated respectively to a plurality of APs 100 in uncoordinated communication (e.g., non-multi-AP coordination). A transmitter (e.g., corresponding to transmission circuitry) transmits the channel information to another AP 100.

FIG. 11 is a block diagram illustrating an exemplary configuration of part of STA 200 according to an embodiment of the present disclosure. In STA 200 illustrated in FIG. 11, a receiver (e.g., corresponding to reception circuitry) receives, from another AP 100, channel information related to the control of coordinated communication (e.g., multi-AP coordination) based on channels allocated respectively to the plurality of APs 100 in uncoordinated communication (e.g., non-multi-AP coordination). A controller (e.g., corresponding to control circuitry) controls the coordinated communication based on the channel information.

### [Exemplary Configuration of AP 100]

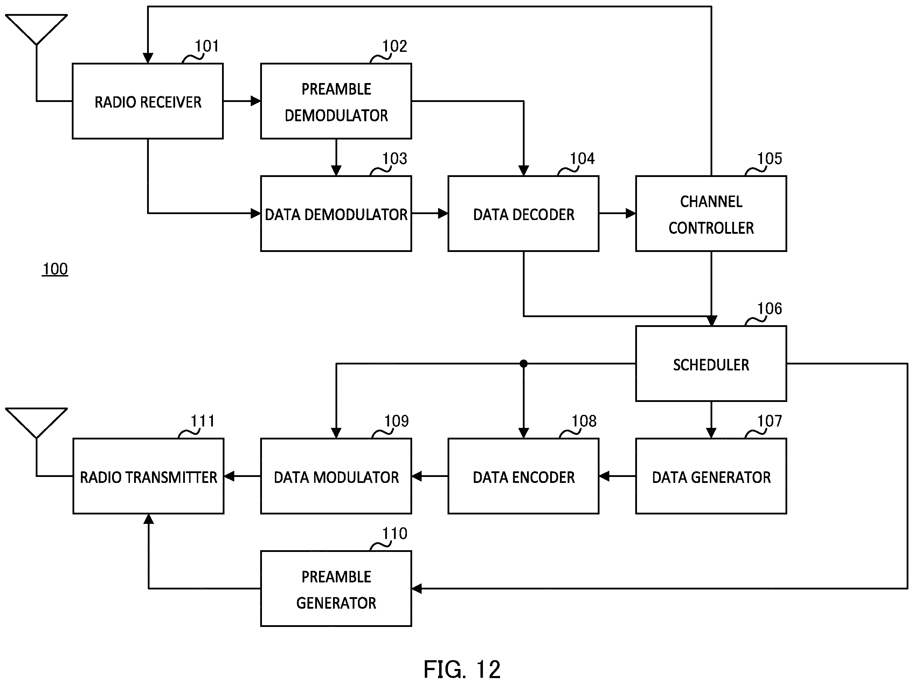

FIG. 12 is a block diagram illustrating an exemplary configuration of AP 100 (e.g., downlink radio transmission apparatus or uplink radio reception apparatus). AP 100 illustrated in FIG. 12 may include, for example, radio receiver 101, preamble demodulator 102, data demodulator 103, data decoder 104, channel controller 105, scheduler 106, data generator 107, data encoder 108, data modulator 109, preamble generator 110, and radio transmitter 111.

Note that, for example, at least one of preamble demodulator 102, data demodulator 103, data decoder 104, channel controller 105, scheduler 106, data generator 107, data encoder 108, data modulator 109, preamble generator 110 may be included in the controller illustrated in FIG. 10, and radio transmitter 111 may be included in the transmitter illustrated in modulator 10.

Radio receiver 101 receives a signal transmitted from another AP 100 (e.g., downlink radio transmission apparatus) or STA 200 (e.g., downlink radio reception apparatus) via an antenna, and performs radio reception processing such as down-conversion and analog-to-digital (A/D) conversion on the received signal. For example, radio receiver 101 divides the received signal after the radio reception processing into a preamble part (also referred to as a preamble signal) and a data part (also referred to as a data signal), outputs the preamble signal to preamble demodulator 102, and outputs the data signal to data demodulator 103.

In addition, when channel information (e.g., primary channel information) is outputted from channel controller 105, for example, radio receiver 101 may configure (e.g., change or switch) a channel (e.g., primary channel) for receiving a signal based on the channel information.

For example, preamble demodulator 102 may perform demodulation processing such as a Fourier transform (e.g., fast Fourier transform (FFT)) on the preamble signal inputted from radio receiver 101, and extract a control signal included in the preamble signal. The control signal may include, for example, a frequency bandwidth (BW), a modulation and coding scheme (MCS), or reception control information, such as an error correction code, used for demodulating and decoding the data signal.

Further, preamble demodulator 102 performs channel estimation based on a reference signal included in the preamble signal, for example, and derives a channel estimate. For example, preamble demodulator 102 outputs the reception control information to data demodulator 103 and data decoder 104, and outputs the channel estimate to data demodulator 103.

For example, data demodulator 103 performs a Fourier transform (e.g., FFT) on the data signal inputted from radio receiver 101, and demodulates the data signal after FFT based on the reception control information and the channel estimate inputted from preamble demodulator 102. Data demodulator 103 outputs a demodulated data signal to data decoder 104.

Data decoder 104, for example, decodes the demodulated data signal inputted from data demodulator 103 based on the reception control information inputted from preamble demodulator 102. For example, data decoder 104 may perform error determination such as a cyclic redundancy check (CRC) on the decoded data signal. When there is no error (i.e., decoding error) in the decoded data signal, for example, data decoder 104 outputs the decoded data signal to scheduler 106. When there is no error in the decoded data and the decoded data signal includes channel information (e.g., information such as a primary channel number or operating channel information), for example, data decoder 104 outputs the channel information to channel controller 105.

For example, when the channel information is outputted from data decoder 104, channel controller 105 may control, based on the channel information, a configuration of a primary channel configured to a BSS controlled by AP 100 and a primary channel configured to a BSS controlled by another AP 100. For example, channel controller 105 may determine whether to change (or switch) a primary channel configured to a BSS controlled by each AP 100 based on the channel information.

When switching a primary channel corresponding to another AP 100, for example, channel controller 105 outputs information on the switched primary channel to scheduler 106. When switching a primary channel corresponding to AP 100, for example, channel controller 105 outputs information on the switched primary channel to scheduler 106 and radio receiver 101 after the primary channel switching timing. The primary channel switching timing may be, for example, a predetermined time (e.g., short inter frame space (SIFS)) after the transmission of the multi-AP coordination local scheduling information.

When not switching a primary channel, for example, channel controller 105 need not output a signal to scheduler 106.

Scheduler 106, for example, determines scheduling information of a signal of coordinated communication (also referred to as a coordination signal). The scheduling information of a coordination signal may include, for example, information such as a scheme of coordinated communication in multi-AP coordination, information of users participating in coordinated communication, information of resources available to users individually, an MCS, or an error correction code.

In addition, scheduler 106 determines channel information related to the control of primary channels in multi-AP coordination, for example, based on the information inputted from channel controller 105. For example, the channel information related to the control of a primary channel in multi-AP coordination may include information on a switched primary channel of AP 100 (e.g., sharing AP) and information on a primary channel of another AP 100 (e.g., shared AP). The channel information related to the control of primary channels in multi-AP coordination may be included in the scheduling information of a coordination signal, for example. Scheduler 106 may also determine frequency resource information, for example, based on information on a primary channel of another AP 100.

Further, scheduler 106 may determine the scheduling information of a coordination signal based on scheduling information indicated by the decoded data signal inputted from data decoder 104.

Scheduler 106 outputs the scheduling information of a coordination signal to data generator 107, data encoder 108, data modulator 109, and preamble generator 110.

Data generator 107, for example, generates a data sequence to be transmitted to another AP 100 (e.g., downlink radio transmission apparatus) or STA 200 (e.g., downlink radio reception apparatus) based on the scheduling information of a coordination signal inputted from scheduler 106, and outputs the data sequence to data encoder 108.

For example, the data sequence transmitted to another AP 100 may include a multi-AP coordination participation request (e.g., CTI) or multi-AP coordination scheduling information (e.g., CTAS). For example, the data sequence transmitted to another AP 100 may include a response signal (e.g., CTR) to the multi-AP coordination participation request (e.g., CTI). For example, the data sequence transmitted to STA 200 may include information on a primary channel for STA 200 to transmit or receive a coordination signal, resource information, a trigger frame for requesting transmission of a UL signal, and a response signal (Ack or Block Ack) to a signal transmitted from STA 200.

Data encoder 108, for example, encodes the data sequence inputted from data generator 107 based on the scheduling information inputted from scheduler 106, and outputs the encoded data to data modulator 109.

Data modulator 109, for example, performs modulation and an inverse Fourier transform (e.g., inverse fast Fourier transform (IFFT)) on the encoded data inputted from data encoder 108 based on the scheduling information inputted from scheduler 106, and outputs the modulated data signal to radio transmitter 111.

Preamble generator 110, for example, generates a preamble signal based on the scheduling information inputted from scheduler 106. For example, preamble generator 110 performs modulation and IFFT processing on the preamble signal and outputs the preamble signal to radio transmitter 111.

Radio transmitter 111 generates a radio frame (may be referred to as, e.g., "packet signal" or "packet") including the data signal inputted from data modulator 109 and the preamble signal inputted from preamble generator 110. Radio transmitter 111 performs radio transmission processing, such as digital-to-analog (D/A) conversion and up-conversion to a carrier frequency, on the generated radio frame, and transmits the signal after the radio transmission processing to another AP 100 or STA200 via an antenna.

### <Exemplary Configuration of STA 200>

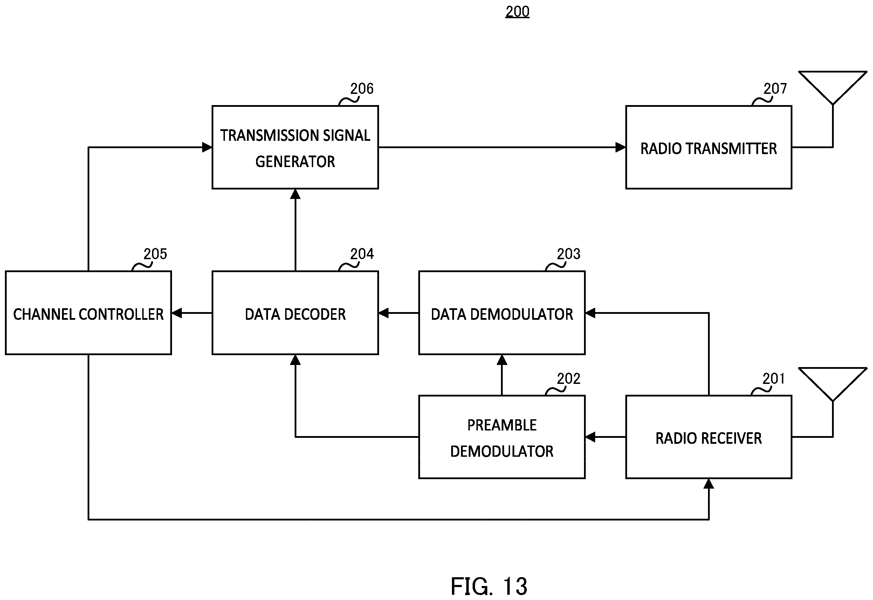

FIG. 13 is a block diagram illustrating an exemplary configuration of STA 200 (e.g., downlink radio reception apparatus). STA 200 illustrated in FIG. 13 may include, for example, radio receiver 201, preamble demodulator 202, data demodulator 203, data decoder 204, channel controller 205, transmission signal generator 206, and radio transmitter 207.

Note that, for example, at least one of preamble demodulator 202, data demodulator 203, data decoder 204, channel controller 205, and transmission signal generator 206 may be included in the controller illustrated in FIG. 11, and radio receiver 201 may be included in the receiver illustrated in FIG. 11.

Radio receiver 201 receives a signal transmitted from AP 100 (downlink radio transmission apparatus) via an antenna, and performs radio reception processing such as down-conversion and A/D conversion on the received signal. Radio receiver 201 extracts a preamble from the signal after the radio reception processing and outputs the preamble to preamble demodulator 202. Radio receiver 201 also extracts a data signal from the signal after the radio reception processing and outputs the data signal to data demodulator 203.

In addition, when channel information (e.g., primary channel information) is outputted from channel controller 205, for example, radio receiver 201 may configure (e.g., change or switch) a channel (e.g., primary channel) for receiving a signal based on the channel information.

Preamble demodulator 202 performs demodulation processing such as FFT on the preamble signal inputted from radio receiver 201, and extracts from the demodulated preamble signal, for example, reception control information (e.g., BW, MCS, or error correction code) to be used for demodulating and decoding a data signal. For example, preamble demodulator 202 outputs the extracted reception control information to data demodulator 203 and data decoder 204. Further, preamble demodulator 202 performs channel estimation based on a reference signal included in the preamble signal, for example, and derives a channel estimate. Preamble demodulator 202 outputs the channel estimate to data demodulator 203.

For example, data demodulator 203 performs a Fourier transform (e.g., FFT) on the data signal inputted from radio receiver 201, demodulates the data signal after FFT based on the reception control information and the channel estimate inputted from preamble demodulator 202, and outputs a demodulated data signal addressed to STA 200 to data decoder 204.

Data decoder 204, for example, decodes the data signal inputted from data demodulator 203 based on the reception control information inputted from preamble demodulator 202, and performs error determination such as CRC. For example, when there is no error in the decoded data, data decoder 204 outputs the decoded data to transmission signal generator 206. When there is no error in the decoded data signal and the decoded data signal includes channel information, for example, data decoder 204 outputs the channel information to channel controller 205.

For example, when the channel information is outputted from data decoder 204, channel controller 205 controls a configuration of a primary channel based on the channel information. When switching a primary channel, for example, channel controller 205 outputs information on the switched primary channel to transmission signal generator 206 and radio receiver 201 after a predetermined timing. The predetermined timing may be, for example, a predetermined time (e.g., SIFS) after the transmission of the multi-AP coordination local scheduling information.

Transmission signal generator 206 generates a transmission signal, for example, based on the decoded data signal inputted from data decoder 204. For example, transmission signal generator 206 may generate a data sequence including a response signal (e.g., ACK or Block ACK (BS)) based on the information on error determination inputted from data decoder 204. For example, when the decoded data signal includes a trigger frame, transmission signal generator 206 may generate a data sequence to be transmitted in a triggerbased physical layer convergence procedure protocol data unit (TB PPDU) based on control information included in the trigger frame. In addition, transmission signal generator 206 encodes the data sequence and performs modulation and IFFT processing in a predetermined frequency resource to generate a data signal. Further, when information is outputted from channel controller 205, for example, transmission signal generator 206 may generate a data signal assigned to a predetermined frequency resource including the switched primary channel indicated by the information. Transmission signal generator 206 adds a preamble signal to the data signal to generate a radio frame (e.g., packet signal), and outputs the radio frame to radio transmitter 207.

Radio transmitter 207 performs radio transmission processing, such as D/A conversion and up-conversion to a carrier frequency, on the radio frame inputted from transmission signal generator 206, and transmits the signal after the radio transmission processing to AP 100 via an antenna.

### [Exemplary Operations of AP 100 and STA200]

Next, exemplary operations of AP 100 and STA 200 according to the present embodiment will be described.

In one non-limiting embodiment of the present disclosure, in multi-AP coordination, for example, AP 100 (e.g., sharing AP) may include channel information related to the control of coordinated communication (e.g., multi-AP coordination) in a signal addressed to another AP 100 (e.g., shared AP). The channel information may include, for example, information on a primary channel for transmitting the information related to the control of coordinated communication, or information on a primary channel for performing coordinated communication.

Further, for example, the information on a primary channel may include at least information on a primary channel (e.g., primary channel number) used by a sharing AP in multi-AP coordination.

In the following, exemplary methods (e.g., Method 1, Method 2, and Method 3) of channel control in multi-AP coordination are described.

### <Method 1>

In Method 1, for example, the channel information may include information on a primary channel (e.g., primary channel number) used by a shared AP in multi-AP coordination.

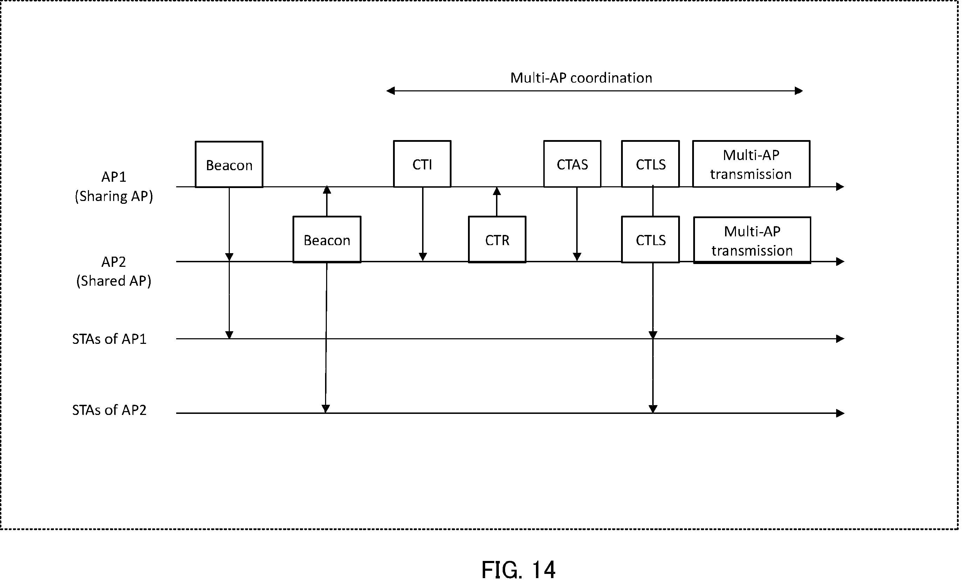

FIG. 14 illustrates an exemplary operation according to Method 1.

In FIG. 14, AP 1 and AP 2 read beacon signals transmitted to STAs (e.g., STAs 200) under the control of respective APs during uncoordinated communication (e.g., non-multi-AP coordination), for example, and obtain primary channel information of another AP 100 in uncoordinated communication. The beacon signals may be transmitted using, for example, non-HT duplicate PPDU.

For example, AP 1 acquires TXOP and operates as a sharing AP. AP 1 may, for example, transmit a multi-AP coordination participation request signal (e.g., CTI) to AP 2. The multi-AP coordination participation request signal may be included in non-HT duplicate PPDU, for example.

In response to the multi-AP coordination participation request signal from AP 1, AP 2 may, for example, transmit a multi-AP coordination participation response signal (e.g., CTR) to AP 1. The multi-AP coordination participation response signal may be included in TB PPDU, for example. AP 1 (sharing AP) may determine APs (e.g., shared APs) to participate in coordinated communication, for example, based on the multi-AP coordination participation response signals from respective APs 100.

Then, AP 1 (sharing AP) may determine, for example, for APs 100 (e.g., AP 2) participating in coordinated communication, control information on a primary channel (e.g., primary channel information) used by the sharing AP and the shared APs in coordinated communication, based on the primary channel information in uncoordinated communication obtained from the beacon signals. AP 1 (sharing AP) may indicate to shared APs (e.g., AP 2), for example, the multi-AP coordination scheduling information (e.g., CTAS) including the information on a primary channel used in coordinated communication. The multi-AP coordination scheduling information may be included in non-HT DUP, for example.

AP 2 (shared AP) may indicate to STAs 200 under the control of AP 2 the multi-AP coordination local scheduling information (e.g., CTLS) including the primary channel information for coordinated communication indicated from AP 1 (sharing AP), for example. The multi-AP coordination local scheduling information may be included in non-HT duplicate PPDU, for example.

AP 1 (sharing AP) may indicate to STAs 200 under the control of AP 1 the multi-AP coordination local scheduling information (e.g., CTLS) including the primary channel information for coordinated communication, for example. The multi-AP coordination local scheduling information may be included in non-HT duplicate PPDU, for example.

In coordinated communication (e.g., multi-AP transmission), the sharing AP (e.g., AP 1), the shared APs (e.g., including AP 2), and STAs 200 under the control of each AP 100 may configure a primary channel based on the primary channel information for multi-AP coordination, and transmit and receive coordinated communication signals. For example, AP 100 and STA200 may perform change processing (or switch processing) of the primary channel when the primary channel used in non-multi-AP coordination and the primary channel used in multi-AP coordination are different from each other.

The exemplary operation according to Method 1 has been described, thus far.

By way of example, as illustrated in FIG. 6, a primary channel may be configured for each AP 100 (e.g., AP 1 and AP 2) outside of each other's operating channel in uncoordinated communication (e.g., non-multi-AP coordination). In this case, sharing AP (e.g., AP 1) may, for example, configure any channel in operating channels of AP 1 and AP 2 that participate in coordinated communication as a primary channel of coordinated communication for AP 1 and AP 2, and indicate that to AP 2. In other words, AP 1 may indicate the change of a primary channel to AP 2. By this indication, a primary channel is allocated in each other's operating channel for AP 1 and AP 2, and thus they can transmit and receive signals to and from each other in coordinated communication.

As another example, as illustrated in FIG. 7, in uncoordinated communication (e.g., non-multi-AP coordination), the same primary channel may be configured for each AP 100 (e.g., AP 1 and AP 2), and a frequency-division multiplexing scheme such as COFDMAmay be applied in multi-AP coordination. In this case, sharing AP (e.g., AP 1) may configure, as illustrated in FIG. 8, any channels in frequency resources (e.g., RU) allocated to respective AP 1 and AP 2 as primary channels of coordinated communication for AP 1 and AP 2, and indicate that to AP 2. In other words, AP 1 may indicate the change of a primary channel to AP 2. By this indication, a primary channel is allocated to AP 1 and AP 2 in the frequency resource allocated to each AP 100, and thus they can transmit and receive signals to and from each other in coordinated communication.

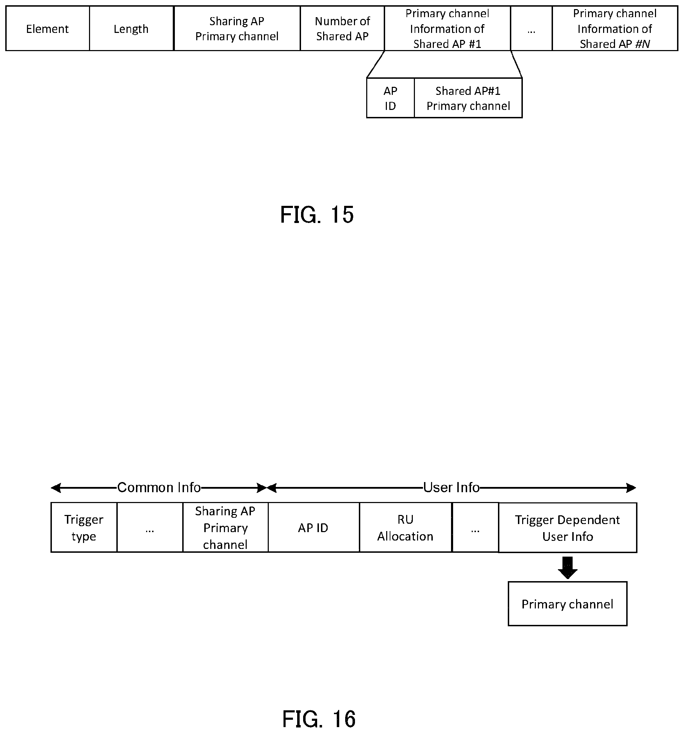

FIG. 15 illustrates an example of indicating primary channel information of coordinated communication according to Method 1 by including it in a management frame.

The management frame (e.g., referred to as a multi-AP coordination channel information element) illustrated in FIG. 15 may include, for example, a "sharing AP primary channel" subfield indicating information on a primary channel (e.g., channel number) of a sharing AP, a "number of shared AP" subfield indicating the number of shared APs participating in coordinated communication, and an individual user information subfield for a shared AP (e.g., "primary channel information of shared AP" subfield).

As illustrated in FIG. 15, the individual user information for a shared AP may include an identifier identifying the corresponding AP 100 (e.g., "AP ID") and a "shared AP primary channel" subfield indicating information on a primary channel (e.g., channel number) of the shared AP.

For example, the sharing AP may indicate the multi-AP coordination channel information element illustrated in FIG. 15 to shared APs by including it in a control signal, such as a beacon signal.

Next, FIG. 16 illustrates an example of indicating primary channel information of coordinated communication according to Method 1 by including it in a trigger frame.

The trigger frame illustrated in FIG. 16 (e.g., referred to as a multi-AP coordination trigger frame) may include, for example, a "sharing AP primary channel" subfield indicating information on a primary channel (e.g., channel number) of the sharing AP in common information (e.g., common info field) common to a plurality of APs 100 or STAs 200.

In addition, the multi-AP coordination trigger frame illustrated in FIG. 16 may include, for example, an "AP ID" subfield indicating an AP ID identifying each shared AP and a "shared AP primary channel" subfield indicating information on a primary channel (e.g., channel number) of the shared AP in the individual user information (e.g., user info field) for a plurality of APs 100 or STAs 200.

Here, a primary channel of the shared AP may be indicated using the "trigger dependent user info" subfield of the user information, for example. When a trigger frame type (e.g., "trigger type" subfield in FIG. 16) corresponds to coordinated communication (e.g., multi-AP coordination or multi-AP operation), for example, a shared AP may obtain primary channel information of the shared AP considering the trigger dependent user info subfield as the shared AP primary channel subfield (e.g., also represented as a primary channel subfield).

In addition, a shared AP may indicate information (e.g., agree or disagree information) whether it agrees (e.g., accepts) or disagrees (e.g., does not accept) with the primary channel configuration indicated by the multi-AP coordination trigger frame transmitted by a sharing AP, for example, by including the information in a response signal to the multi-AP coordination trigger frame.

According to Method 1, a sharing AP can appropriately configure a primary channel for each AP in coordinated communication based on primary channel information of other shared APs in uncoordinated communication (non-multi-AP coordination). This makes it possible to prevent a primary channel from being configured outside of an operating channel of an AP participating in coordinated communication, and thereby appropriately transmitting and receiving signals related to coordinated communication.

Next, a description will be given of exemplary indication of primary channel information of coordinated communication for each AP 100 in Method 1.

For example, an indication method (or content) of primary channel information of coordinated communication for each AP 100 may be configured according to a coordinated communication method (or coordinated communication scheme).

For example, in a case of coordinated communication method using different frequency resources for a plurality of APs 100 (e.g., COFDMA), a sharing AP may indicate individual primary channel information for each AP 100 (e.g., sharing AP and shared APs). In this case, for example, the sharing AP may determine primary channels in allocated frequency resources of the respective shared AP. The sharing AP may also indicate primary channel information to the shared APs using, for example, a frame illustrated in FIG. 15 or FIG. 16.

For example, in a case of a coordinated communication method using a common frequency resource for a plurality of APs 100 (e.g., JT, CSR, CBF, CTDMA, or joint sounding), the sharing AP may indicate primary channel information common to the respective APs (e.g., sharing AP and shared APs). In this case, the sharing AP and the shared APs may use a common primary channel.

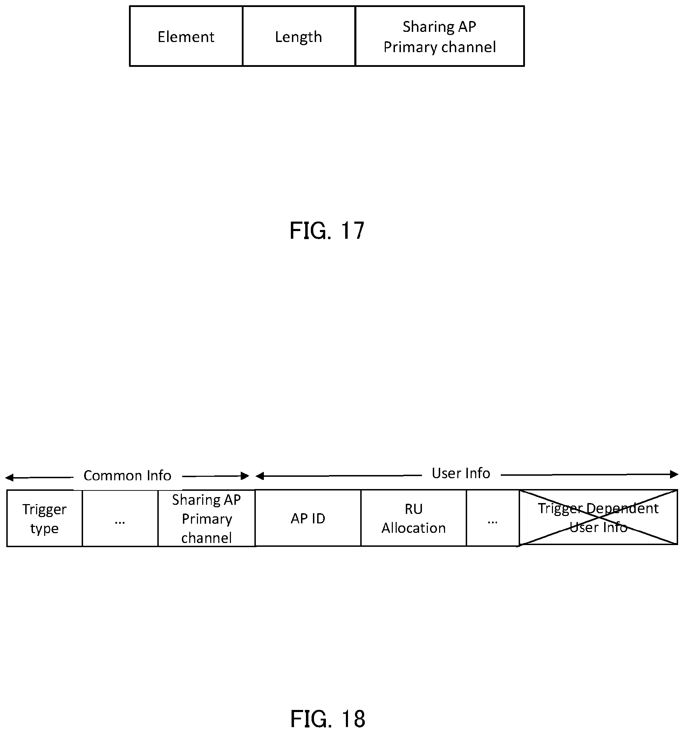

FIG. 17 and FIG. 18 illustrate exemplary indication (or exemplary format) of primary channel information of coordinated communication when a coordinated communication method using a common frequency resource for a plurality of APs 100 is used.

In the frame (e.g., multi-AP coordination channel information element (JT/C-SR/C-BF/C-TDMA/joint sounding)) illustrated in FIG. 17, for example, information on a primary channel (e.g., channel number) commonly used by a sharing AP and shared APs in coordinated communication may be indicated by the "sharing AP primary channel" subfield.

Further, in the multi-AP coordination trigger frame (JT/C-SR/C-BF/C-TDMA/j oint sounding) illustrated in FIG. 18, for example, information on a primary channel (e.g., channel number) commonly used by a sharing AP and shared APs in coordinated communication may be indicated by the sharing AP primary channel subfield of the common information. In FIG. 18, unlike in FIG. 16, in the user information of the multi-AP coordination trigger frame, primary channel information of the shared AP need not be included in the trigger dependent user info.

Further, for example, the information element or the type of a trigger frame used for indicating primary channel information of coordinated communication may be changed according to the coordinated communication method (also referred to as the coordinated communication type). For example, different trigger frame types may be defined depending on whether it is a coordinated communication method using different frequency resources for a plurality of APs 100 or a coordinated communication method using a common frequency resource for a plurality of APs 100.

For example, in a case of a trigger frame type corresponding to the coordinated communication method using different frequency resources for a plurality of APs 100, the primary channel information of coordinated communication may be indicated by the multi-AP coordination trigger frame illustrated in FIG. 16. For example, in a case of a trigger frame type corresponding to the coordinated communication method using a common frequency resource for a plurality of APs 100, the primary channel information of coordinated communication may be indicated by the multi-AP coordination trigger frame illustrated in FIG. 18.

Further, for example, a shared AP may replace each negotiation signal or trigger frame signal based on information on the coordinated communication method (e.g., coordinated communication type information).

As described above, a sharing AP can indicate channel information appropriate for each of the coordinated communication methods by changing the method of indicating primary channel information of coordinated communication based on the coordinated communication method. In other words, it is possible to prevent transmission of unnecessary information as the primary channel information and reduce signaling overhead according to the coordinated communication method.

### <Method 2>

In Method 2, for example, channel information may include information on an available operating channel in coordinated communication common to a plurality of APs 100 participating in coordinated communication (e.g., referred to as operation channel information).

In the exemplary operation according to Method 2, for example, the operation may be the same as the exemplary operation illustrated in FIG. 14, and some processing may be different from that.

In FIG. 14, AP 1 and AP 2 read beacon signals transmitted to STAs (e.g., STAs 200) under the control of respective APs during uncoordinated communication (e.g., non-multi-AP coordination), for example, and obtain the operating channel information of another AP 100 in uncoordinated communication.

Also, in FIG. 14, for example, AP 1 that acquires TXOP and operates as a sharing AP may transmit a multi-AP coordination participation request signal (e.g., CTI) to AP 2. In response to the multi-AP coordination participation request signal from AP 1, AP 2 may, for example, transmit a multi-AP coordination participation response signal (e.g., CTR) to AP 1. AP 1 (sharing AP) may determine APs (e.g., shared APs) to participate in coordinated communication, for example, based on the multi-AP coordination participation response signals from respective APs 100.

Then, AP 1 (sharing AP) may determine, for example, for APs 100 (e.g., AP 2) participating in coordinated communication, an operating channel (hereinafter, referred to as a "multi-AP operating channel") to be used by the sharing AP and the shared APs in coordinated communication, based on the operating channel information obtained from the beacon signals during uncoordinated communication. AP 1 (sharing AP) may determine a primary channel used by the sharing AP in coordinated communication, for example, from the multi-AP operating channel.

AP 1 (sharing AP) may also indicate to shared APs (e.g., AP 2), for example, information on a primary channel of the sharing AP in coordinated communication and multi-AP coordination scheduling information (e.g., CTAS) including the multi-AP operating channel.

Upon receiving the multi-AP coordination scheduling information indicated from AP 1, for example, AP 2 (shared AP) may determine a primary channel to be used in coordinated communication by AP 2 within the indicated multi-AP operating channel and the frequency resource allocated to AP 2. Then, AP 2 may indicate to STAs 200 under the control of AP 2 the multi-AP coordination local scheduling information (e.g., CTLS) including the primary channel information of AP 2 in coordinated communication.

In coordinated communication (e.g., multi-AP transmission), the sharing AP (e.g., AP 1), the shared APs (e.g., including AP 2), and STAs 200 under the control of each AP 100 may configure a primary channel based on the primary channel information for multi-AP coordination, and transmit and receive coordinated communication signals. For example, AP 100 and STA200 may perform change processing (or switch processing) of the primary channel when the primary channel used in non-multi-AP coordination and the primary channel used in multi-AP coordination are different from each other.

The exemplary operation according to Method 2 has been described, thus far.

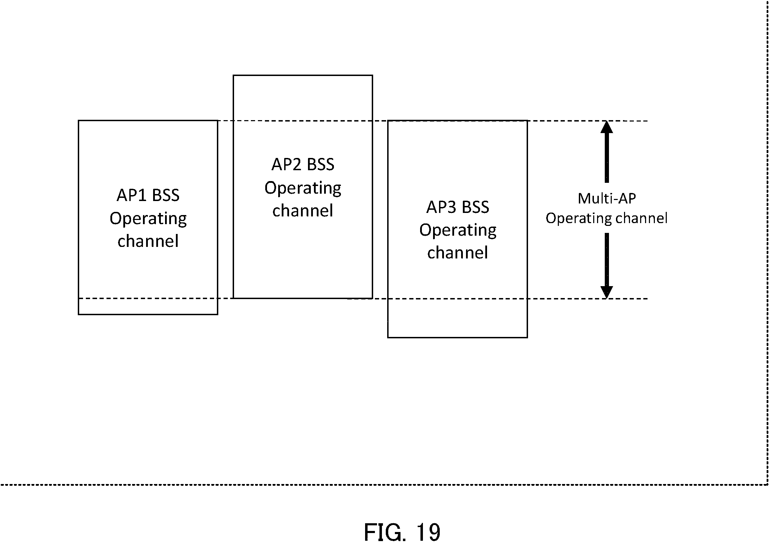

FIG. 19 illustrates an exemplary configuration of the multi-AP operating channel.

As illustrated in FIG. 19, among the operating channels of APs 100 (e.g., AP 1, AP 2, and AP 3) participating in coordinated communication, a common channel (i.e., overlapping channel) may be configured to be the multi-AP operating channel.

Note that FIG. 19 illustrates an example in which all channels common to the operating channels of AP 1, AP 2, and AP 3 are configured to be the multi-AP operating channel, but the present disclosure is not limited thereto, and at least a part of the channels common to the operating channels of AP 1, AP 2, and AP 3 may be configured to be the multi-AP operating channel.

For example, each of AP 1, AP 2, and AP 3 may configure any in the multi-AP operating channel to be the primary channel. This allows AP 1, AP 2, and AP 3 to configure the primary channel in the operating channels of both the sharing APs and the shared AP in coordinated communication.

By way of example, as illustrated in FIG. 6, a primary channel may be configured for each AP 100 (e.g., AP 1 and AP 2) outside of each other's operating channel in uncoordinated communication (e.g., non-multi-AP coordination). In this case, a sharing AP (e.g., AP 1) may, for example, configure an operating channel common to AP 1 and AP 2 participating in coordinated communication to be the multi-AP operating channel, and indicate the multi-AP operating channel to AP 2. Each of AP 1 and AP 2 configures a primary channel in both the multi-AP operating channel and the resource (e.g., channel) allocated to each of AP 1 and AP 2, and thus can transmit and receive signals to and from each other in coordinated communication.

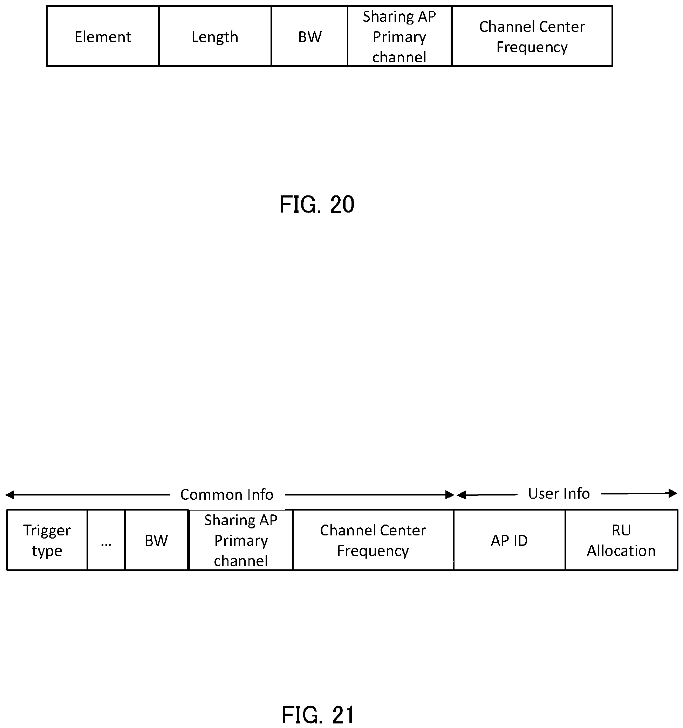

FIG. 20 illustrates an example of indicating primary channel information of coordinated communication according to Method 2 by including it in a management frame.

The management frame (e.g., referred to as a multi-AP coordination operating channel information element) illustrated in FIG. 20 may include, for example, a "sharing AP primary channel" subfield indicating information on a primary channel (e.g., channel number) of a sharing AP, a "bandwidth (BW)"subfield indicating the bandwidth of a multi-AP operating channel, and a "channel center frequency" subfield indicating the center frequency of the multi-AP operating channel.

For example, a sharing AP may indicate the multi-AP coordination channel information element illustrated in FIG. 20 to shared APs by including it in a control signal, such as a beacon signal.

Next, FIG. 21 illustrates an example of indicating primary channel information of coordinated communication according to Method 2 by including it in a trigger frame.

The trigger frame illustrated in FIG. 21 (e.g., referred to as a multi-AP coordination operating channel trigger frame) may include, for example, the sharing AP primary channel subfield, the bandwidth (BW) subfield, and the channel center frequency subfield in the common information (common info field).

A shared AP may determine a primary channel of coordinated transmission based on, for example, a frequency resource (e.g., channel) allocated to the shared AP and information on the multi-AP operating channel indicated by the frame of FIG. 20 or FIG. 21. For example, the shared AP may specify the multi-AP operating channel by deriving the lowest frequency of the multi-AP operating channel by "channel center frequency" - "BW"/2. Alternatively, for example, the shared AP may specify the multi-AP operating channel by deriving the highest frequency of the multi-AP operating channel by "channel center frequency" + "BW"/2.

According to Method 2, each AP 100 (e.g., sharing AP and shared APs) can determine the configuration (e.g., whether to change or switch) of a primary channel of coordinated communication used by the AP 100, and configure an appropriate primary channel.

Further, for example, while a sharing AP determines all primary channels of shared APs in Method 1, each shared AP controls (e.g., determines or configures) a primary channel in Method 2, thereby reducing the computational load on the sharing AP regarding coordinated communication.

### <Method 3>

In Method 3, for example, a sharing AP instructs APs 100 in the coordination group to transmit primary channel information.

The coordination group is, for example, a group that performs multi-AP coordination. The coordination group includes, for example, an "AP candidate set" and a "virtual basic service set (virtual BSS)".

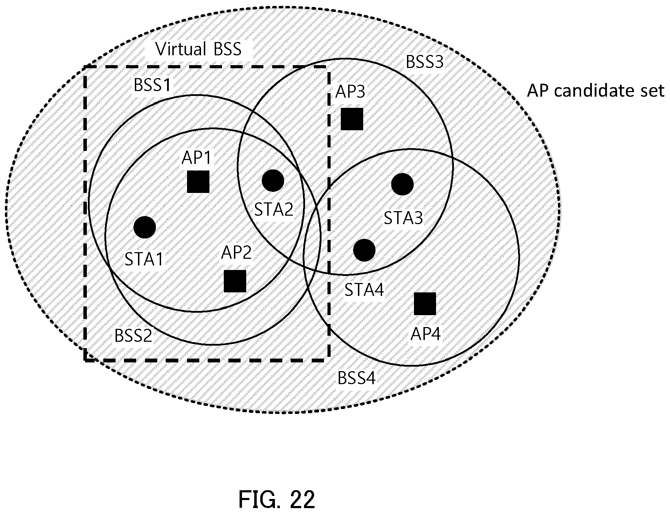

FIG. 22 illustrates an exemplary AP candidate set and virtual BSS.

As illustrated in FIG. 22, the AP candidate set may be a group composed of a plurality of APs (e.g., AP 1, AP 2, AP 3, and AP4). For example, a sharing AP and shared APs for performing multi-AP coordination may be selected from APs included in the AP candidate set.

As also illustrated in FIG. 22, the virtual BSS may be a group composed of a plurality of basic service sets (BSSs) (e.g., BSS 1 and BSS 2) for performing multi-AP coordination. The APs participating in the virtual BSS may have, for example, a common service set identifier (SSID). In addition, the APs included in the virtual BSS may share, for example, information on the STAs belonging to each BSS (e.g., association identifiers (AIDs) of STAs).

In Method 3, for example, the sharing AP may transmit and receive primary channel information to and from other APs 100 (e.g., shared APs) using a channel outside the operation channel of the sharing AP. By way of example, the sharing AP may use, for the transmission and reception of the primary channel information, a frame (e.g., "public action frame") that can be used for transmission and reception between different BSSs.

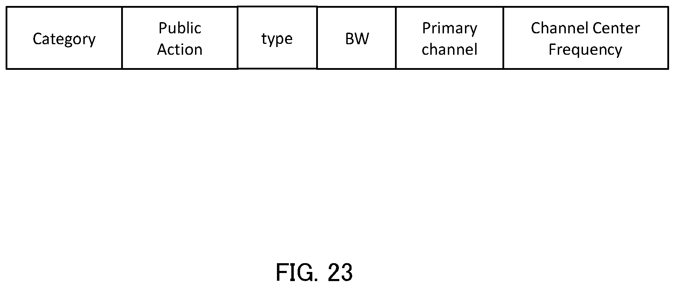

FIG. 23 illustrates an exemplary public action frame indicating the primary channel information (also referred to as a "primary channel information frame") according to Method 3.

The frame (e.g., primary channel information frame) illustrated in FIG. 23 may include, for example, a "type" subfield indicating the frame type, a "primary channel" subfield indicating information on a primary channel (e.g., channel number) of the source AP, a "bandwidth (BW)" subfield indicating the bandwidth of an operating channel of the source AP, and a "channel center frequency" subfield indicating the center frequency of the operating channel of the source AP.

When type = 0 in the type subfield, for example, the primary channel information frame may operate as a "channel information request". The channel information request may be used by the sharing AP to indicate the primary channel information of the sharing AP to other APs 100 (e.g., shared APs) and request transmission of the primary channel information of destination APs, for example.

When type = 1 in the type subfield, for example, the primary channel information frame may operate as a "channel information response". The channel information response may be used as a response signal to the channel information request, for example, to indicate the primary channel information of the source AP (e.g., shared AP) to the sharing AP.

When type = 2 in the type subfield, for example, the primary channel information frame may operate as "multi-AP channel information". The multi-AP channel information may be used for indicating the primary channel information used for transmission and reception of a negotiation signal (e.g., CTI, CTR, or CTAS in FIG. 14) related to coordinated communication, for example.

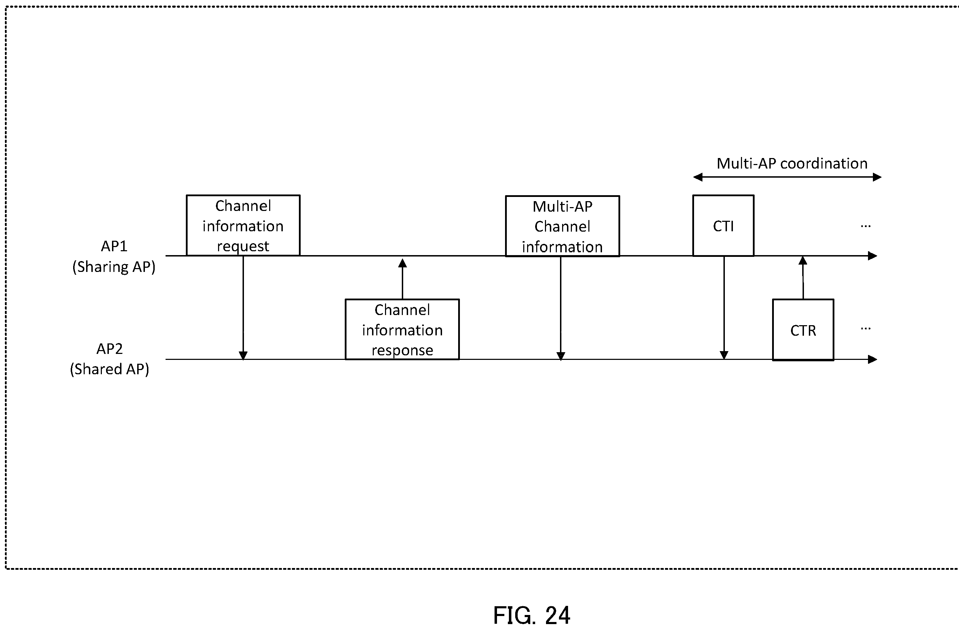

FIG. 24 illustrates an exemplary operation according to Method 3.

FIG. 24 illustrates a case where AP 1 (e.g., sharing AP) and AP 2 (e.g., shared AP) belong to a common coordination group, and a primary channel of AP 2 is configured outside of an operating channel of AP 1.

AP 1 requests transmission of primary channel information of AP 2 in non-multi-AP coordination by, for example, transmitting the channel information request (e.g., type = 0) to AP 2. The channel information request may include primary channel information of AP 1 in non-multi-AP coordination.

AP 2 responds to the channel information request by transmitting the channel information response (e.g., type = 1) to AP 1 based on, for example, the primary channel information of AP 1 obtained in the channel information request.

AP 1 determines, based on the primary channel information of AP 2 obtained in the channel information response from AP 2, an operating channel and a primary channel available to all APs 100 participating in coordinated communication. AP 1 then transmits, for example, the multi-AP channel information (e.g., type = 2) to APs 100 (e.g., including AP 2) participating in coordinated communication.

As described above, AP 1 may transmit channel information (e.g., channel information request or multi-AP channel information) related to the control of coordinated communication to other APs (e.g., AP 2) using a channel other than the channel allocated to AP 1 (e.g., channel corresponding to the public action frame). In addition, AP 2 may receive information of a channel (e.g., channel information response) allocated to AP 2 in uncoordinated communication using a channel other than the channel allocated to AP 2, for example. This allows AP 1 and AP 2 to transmit and receive the channel information related to the control of coordinated communication by using the public action frame even when a primary channel of AP 2 is configured outside of an operating channel of AP 1 or when a primary channel of AP 1 is configured outside of an operating channel of AP 2.

In FIG. 24, after the multi-AP channel information is transmitted, AP 1 and AP 2 may configure (e.g., change or switch) the primary channel of coordinated communication indicated by the multi-AP channel information, and transmit and receive negotiation signals (e.g., CTI, CTR, or CTAS) related to multi-AP coordination.

By way of example, as illustrated in FIG. 6, a primary channel may be configured for each AP 100 (e.g., AP 1 and AP 2) outside of each other's operating channel in uncoordinated communication (e.g., non-multi-AP coordination). In this case, AP 1 (e.g., sharing AP) may transmit the public action frame (e.g., channel information request or multi-AP channel information) to AP 2 in a band outside of the operating channel of AP 1 and within the operating channel (e.g., primary channel) of AP 2. Also, for example, AP 2 (e.g., shared AP) may transmit the public action frame (e.g., channel information response) to AP 1 in a band outside of the operating channel of AP 2 and within the operating channel (e.g., primary channel) of AP 1. This allows AP 1 and AP 2 to perform the configuration on coordinated communication based on the public action frame from the other AP 100 even when each primary channel is configured outside of the operating channel of the other AP 100, thereby improving the efficiency of the coordinated communication control.

According to Method 3, the use of a public action frame for indicating primary channel information allows AP 100 to share primary channel information of each AP 100 and determine a primary channel for transmitting negotiation signals on coordinated communication, even when a primary channel of another AP 100 is outside of the operation channel.

Exemplary methods of channel control in multi-AP coordination have been described, thus far.

As described above, in the present embodiment, AP 100 (e.g., sharing AP) determines channel information (e.g., primary channel) related to the control of coordinated communication (e.g., multi-AP coordination) based on channels (e.g., primary channel information) allocated respectively to a plurality of APs 100 in uncoordinated communication, and transmits information on the determined primary channel to another AP 100. Then, AP 100 (e.g., sharing AP and shared AP) and STA 200 perform the control of coordinated communication (e.g., configuration, change, or switch of the primary channel of multi-AP coordination) based on the channel information related to the control of coordinated communication.

In the present embodiment, this allows AP 100 and STA200 to configure a primary channel of multi-AP coordination appropriately according to, for example, primary channel configurations of the plurality of APs 100 in non-multi-AP coordination or a coordinated communication scheme in multi-AP coordination. Thus, the present embodiment makes it possible to improve the communication efficiency of coordinated communication in multi-AP coordination.

An embodiment of the present disclosure has been described, thus far.

### (Other Embodiments)

(1) In the above-described embodiment, an AP that acquires TXOP (or AP that controls coordinated communication) is called a "sharing AP", and an AP that is subject to coordination control by the sharing AP is called a "shared AP", but these names may be different. For example, the sharing AP may be referred to as a "coordination AP" or a "master AP". The shared AP may be referred to as a "coordinated AP" or a "slave AP".
(2) In the above-described embodiment, primary channel information of non-multi-AP coordination is included in a beacon signal and indicated to another AP 100, but the indication of primary channel information of non-multi-AP coordination is not limited to the method using a beacon signal, and another indication method may be applied. For example, the primary channel information of non-multi-AP coordination may be included in at least one of a multi-AP coordination participation request signal (e.g., CTI in FIG. 2) and a multi-AP coordination participation response signal (CTR in FIG. 2).
(3) In the above-described embodiment, a channel indicated by the channel information is not limited to a primary channel individually determined for BBS.

For example, a primary channel for non-multi-AP coordination individually determined for BSS may be configured (e.g., changed) by the channel information during a period of multi-AP coordination.

Further, for example, a primary channel for multi-AP coordination other than the primary channel for non-multi-AP coordination individually determined for BSS may be newly configured by the channel information.

In a non-limiting embodiment of the present disclosure, a channel indicated by the channel information is not limited to a primary channel. For example, in a case where a channel (e.g., subchannel, off-channel, and temporary primary channel) used for multi-AP coordination with a name other than the primary channel is defined, a non-limiting embodiment of the present disclosure may be applied to the channel.

(4) A non-limiting embodiment of the present disclosure may be applied to a case of indicating channel information used when AP 100 and STA200 or STA200 and STA200 communicate with each other by peer-to-peer (P2P), for example.

(5) In a non-limiting embodiment of the present disclosure, a common (identical) primary channel may be used in non-multi-AP coordination and multi-AP coordination.

For example, when primary channels of APs 100 for non-multi-AP coordination are included in each other's operating channel, a primary channel for multi-AP coordination may be the same as the primary channel for non-multi-AP coordination. In other words, the primary channel need not be switched (or changed) between non-multi-AP coordination and multi-AP coordination.

When the primary channel is not changed, each AP 100 need not indicate a change of the primary channel. Also, when the primary channel is not changed, each AP 100 may indicate the same primary channel information as in non-multi-AP coordination to another AP.

(6) Either Method 1 or Method 2, and Method 3 may be applied in combination. For example, a primary channel may be determined between APs 100 for transmitting and receiving negotiation signals (e.g., CTI, CTR, CTAS, or CTLS) related to coordinated communication based on Method 3. After that, for example, a sharing AP may determine a primary channel to be used by each AP 100 in coordinated communication, based on a coordinated communication method determined by the negotiation signals related to coordinated communication. For example, the primary channel used by each AP 100 in coordinated communication may be determined and indicated based on Method 1 or Method 2.

(7) A transmission format of a negotiation signal related to coordinated communication is not limited to the non-HT duplicate PPDU. For example, when all terminals (e.g., APs 100 and STAs 200) participating in coordinated communication support another format (e.g., HT PPDU or HE PPDU, EHT PPDU) newer than the non-HTT duplicate PPDU referring to the capabilities of the terminals, the negotiation signal related to coordinated communication may be transmitted by another transmission format.

(8) In the above-described Methods 1 to 3, a management frame, a trigger frame, and a public action frame are newly defined as frames used for indicating primary channel information, but the indication of primary channel information may use another method.

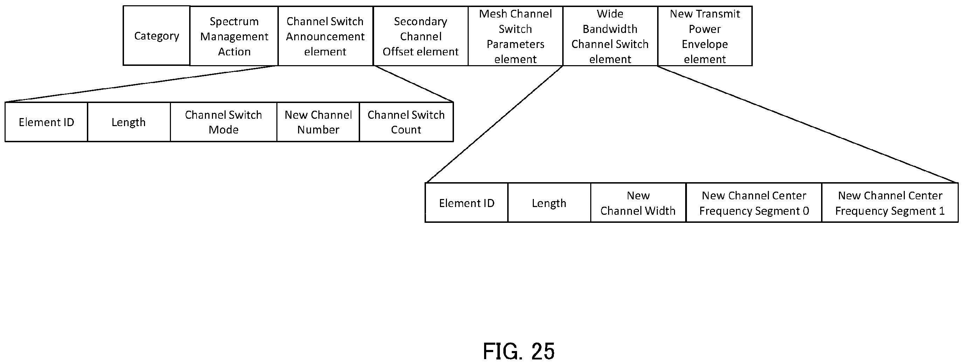

FIG. 25 illustrates an example where primary channel information related to coordinated communication is indicated using a channel switch announcement frame.

The channel switch announcement frame is a signal used for indicating channel switch in non-multi-AP coordination defined in 802.11n.

In a case where primary channel information related to coordinated communication is indicated using the channel switch announcement frame, for example, the primary channel information (e.g., changed primary channel number) related to coordinated communication may be indicated in the "new channel number" subfield included in the "channel switch announcement element" field illustrated in FIG. 25.

Further, for example, the bandwidth of an operating channel related to coordinated communication may be indicated in the "new channel width" subfield included in the "wide bandwidth channel switch element" field illustrated in FIG. 25, and the center frequency of the operating channel related to coordinated communication may be indicated in the "new channel center frequency segment 0/1" subfield.

(9) a primary channel configuration period (e.g., changing period or switching period) in multi-AP operation may be a temporary period.

For example, the configuration period of a primary channel related to coordinated communication may be set to a period corresponding to the TXOP duration indicated from AP 100 (e.g., sharing AP).

Further, for example, when the end of the TXOP period is indicated before the end of the period corresponding to the TXOP duration, the end of the configuration period of a primary channel related to coordinated communication may also be indicated. Note that, for example, a contention-free (CF)-end frame may be used for the indication of the end of the TXOP period.

(10) The values such as the numbers of APs, STAs, and BSSs used in the above-described embodiment are merely examples and are not limited, and other values may be set.

Further, in the above-described embodiment, the primary 20 MHz channel is used as an example of a primary channel, the primary channel is not limited to this and may be another type of channel (e.g., primary 40 MHz channel or primary 80 MHz channel).

In the above-described embodiment, the channel number of a primary channel is indicated in channel information in Method 1 by way of example, but the parameter indicated by the channel information is not limited to the channel number. For example, the channel information may be another parameter that gives the channel number or an offset value for a certain channel number (e.g., channel number of sharing AP).

Further, in the above-described embodiment, the bandwidth and the center frequency of an operating channel are indicated in channel information in Method 2 by way of example, but the parameters indicated by the channel information are not limited to the bandwidth and the center frequency. For example, the channel information may be information (e.g., bitmap information) indicating whether each of a plurality of channels included in a certain frequency band is a channel corresponding to the operating channel, or may be a combination of the bandwidth of the operating channel and the starting or ending channel number (or channel number of the lowest or highest frequency).

While an exemplary configuration based on the 11ax frame format has been described in the above embodiments by way of example, the format to which an embodiment of the present disclosure is applied is not limited to the 11ax format.

An embodiment of the present disclosure is also applicable to UL communication, DL communication, or sidelink.

The frame configurations (e.g., formats) described in the above embodiments are mere examples. The frame configurations are not limited to the above-described configurations and may be other frame configurations. For example, some of the fields in these frame configurations need not be configured, and another field may be further configured.

(11) Information indicating whether STA 200 supports the functions, operations, or processing described in the above embodiments may be transmitted (or indicated) from STA 200 to AP 100 as capability information or capability parameters of STA 200, for example.

The capability information may include information elements (IEs) that individually indicate whether STA 200 supports at least one of the functions, operations, and/or processing described in each of the above embodiments. Alternatively, the capability information may include an information element indicating whether STA 200 supports any combination of two or more of the functions, operations, and/or processing described in each of the above embodiments. The information element is also simply referred to as an "element".

For example, AP 100 may determine (decide or assume), based on the capability information received from STA 200, which functions, operations, and/or processing are supported (or not supported) by STA 200, which is the source of the capability information. AP 100 may perform the operation, processing, or control in accordance with the result of the determination based on the capability information. For example, AP 100 may control multi-AP coordination based on the capability information received from STA 200.

Note that not supporting by STA 200 some of the functions, operations, and/or processing described in each of the above embodiments may be considered as a restriction on such functions, operations, and/or processing in STA 200. For example, information or a request regarding such a restriction may be indicated to AP 100.

Information regarding the capabilities of or restrictions on STA 200 may be defined in, for example, the standard or may be associated with information known to AP 100 or information transmitted to AP 100 and implicitly transmitted to AP 100.

(12) The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

The technique of implementing an integrated circuit is not limited to the LSI and may be realized by using a dedicated circuit, a general-purpose processor, or a specialpurpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas. Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

An access point according to an embodiment of the present disclosure includes: control circuitry, which, in operation, determines channel information related to control of coordinated communication based on channels allocated respectively to a plurality of access points in uncoordinated communication; and transmission circuitry, which, in operation, transmits the channel information to another access point.

In an embodiment of the present disclosure, the channel information includes information on a primary channel used in the coordinated communication by a first access point that controls the coordinated communication.

In an embodiment of the present disclosure, the channel information includes information on a primary channel used in the coordinated communication by a second access point, the coordinated communication of which is controlled.

In an embodiment of the present disclosure, the control circuitry determines a content of the channel information in accordance with a scheme of the coordinated communication.

In an embodiment of the present disclosure, the channel information includes information on an individual primary channel for the second access point when the scheme of the coordinated communication is a scheme using different frequency resources for the plurality of access points.

In an embodiment of the present disclosure, the channel information includes information on a primary channel common to a first access point that controls the coordinated communication and the second access point when the scheme of the coordinated communication is a scheme using a common frequency resource for the plurality of access points.

In an embodiment of the present disclosure, the channel information includes information on a channel commonly available to the plurality of access points in the coordinated communication.

In an embodiment of the present disclosure, the transmission circuitry transmits the channel information using a channel that is different from a first channel allocated to the access point, the channel being referred to as a second channel.

In an embodiment of the present disclosure, the transmission circuitry transmits the channel information using a public action frame of the second channel.

An access point according to an embodiment of the present disclosure includes: reception circuitry, which, in operation, receives channel information related to control of coordinated communication from another access point, the channel information being information based on channels allocated respectively to a plurality of access points in uncoordinated communication; and control circuitry, which, in operation, controls the coordinated communication based on the channel information.

A communication method according to an embodiment of the present disclosure includes: determining, by an access point, channel information related to control of coordinated communication based on channels allocated respectively to a plurality of access points in uncoordinated communication; and transmitting, by the access point, the channel information to another access point.

A communication method according to an embodiment of the present disclosure includes: receiving, by an access point, channel information related to control of coordinated communication from another access point, the channel information being information based on channels allocated respectively to a plurality of access points in uncoordinated communication; and controlling, by the access point, the coordinated communication based on the channel information.

The disclosure of Japanese Patent Application No. 2021-180361, filed on November 4, 2021, including the specification, drawings and abstract, is incorporated herein by reference in its entirety.

### Industrial Applicability

An exemplary embodiment of the present disclosure is useful for radio communication systems.

### Reference Signs List

100 AP
101, 201 Radio receiver
102 Preamble demodulator
103 Data demodulator
104 Data decoder
105, 205 Channel controller
106 Scheduler
107 Data generator
108 Data encoder
109 Data modulator
110 Preamble generator
111, 207 Radio transmitter
200 STA
202 Preamble demodulator
203 Data demodulator
204 Data decoder
206 Transmission signal generator

## Claims

1. An access point, comprising:
control circuitry, which, in operation, determines channel information related to control of coordinated communication based on channels allocated respectively to a plurality of access points in uncoordinated communication; and
transmission circuitry, which, in operation, transmits the channel information to another access point.

2. The access point according to claim 1, wherein the channel information includes information on a primary channel used in the coordinated communication by a first access point that controls the coordinated communication.

3. The access point according to claim 1, wherein the channel information includes information on a primary channel used in the coordinated communication by a second access point, the coordinated communication of which is controlled.

4. The access point according to claim 3, wherein the control circuitry determines a content of the channel information in accordance with a scheme of the coordinated communication.

5. The access point according to claim 4, wherein the channel information includes information on an individual primary channel for the second access point when the scheme of the coordinated communication is a scheme using different frequency resources for the plurality of access points.

6. The access point according to claim 4, wherein the channel information includes information on a primary channel common to a first access point that controls the coordinated communication and the second access point when the scheme of the coordinated communication is a scheme using a common frequency resource for the plurality of access points.

7. The access point according to claim 1, wherein the channel information includes information on a channel commonly available to the plurality of access points in the coordinated communication.

8. The access point according to claim 1, wherein the transmission circuitry transmits the channel information using a channel that is different from a first channel allocated to the access point, the channel being referred to as a second channel.

9. The access point according to claim 8, wherein the transmission circuitry transmits the channel information using a public action frame of the second channel.

10. An access point, comprising:
reception circuitry, which, in operation, receives channel information related to control of coordinated communication from another access point, the channel information being information based on channels allocated respectively to a plurality of access points in uncoordinated communication; and
control circuitry, which, in operation, controls the coordinated communication based on the channel information.

11. A communication method, comprising:
determining, by an access point, channel information related to control of coordinated communication based on channels allocated respectively to a plurality of access points in uncoordinated communication; and
transmitting, by the access point, the channel information to another access point.

12. A communication method, comprising:
receiving, by an access point, channel information related to control of coordinated communication from another access point, the channel information being information based on channels allocated respectively to a plurality of access points in uncoordinated communication; and
controlling, by the access point, the coordinated communication based on the channel information.
